# EUROPEAN PATENT APPLICATION

(11) **EP 2 833 466 A1**
(43) Date of publication of application: **04.02.2015**
(21) Application number: 13767533.6
(22) Date of filing: 27.03.2013
(51) Int. Cl.: H01M 10/0565, H01M 4/13, H01M 4/62, H01M 10/052

(54) **LITHIUM-ION SECONDARY BATTERY**

(30) Priority: 30.03.2012 JP 2012079912
(71) Applicant: Kojima Industries Corporation, Toyota-shi, Aichi 471-0875 (JP)
(72) Inventor: NOGUCHI, Masumi, Toyota-shi Aichi 471-0875 (JP)
(74) Representative: Smith, Matthew
(86) International application number: PCT/JP2013/058928
(87) International publication number: WO 2013/146850

(57) **Abstract**

Provided is a lithium-ion secondary battery which can exhibit a stable cell performance, which has a high degree of freedom of choice of its shape, an improved output density, an improved flexural strength and a reduced size, which can be produced by an apparatus simplified as far as possible, with a reduced cycle time and at a reduced cost. The lithium-ion secondary battery has a laminar body wherein a positive electrode layer and a negative electrode layer are laminated on respective opposite surfaces of a solid electrolyte layer. The positive electrode layer is constituted by a first vapor-deposited polymer film containing a positive electrode active substance, and the negative electrode layer is constituted by a second vapor-deposited polymer film containing a negative electrode active substance, while the solid electrolyte layer is constituted by a third vapor-deposited polymer film having lithium-ion conductivity.

## Description

### TECHNICAL FIELD

The present invention relates to a lithium-ion secondary battery, and more particularly to improvements of an all solid type lithium-ion secondary battery having a laminar body (electric power generating element) wherein a positive electrode layer and a negative electrode layer are laminated on respective opposite surfaces of a solid electrolyte layer.

### BACKGROUND ART

A lithium-ion secondary battery having a high energy density is widely used as an electric power source in portable electronic devices such as notebook personal computers and cellular or mobile phones. This lithium-ion secondary battery is generally classified into two kinds, namely, a lithium-ion secondary battery using a liquid-type electrolyte (including a liquid electrolyte and a gel-type electrolyte), and a so-called all solid type lithium-ion secondary battery using a solid electrolyte. Of these two kinds of lithium-ion secondary battery, the all solid type lithium-ion secondary battery does not have a risk of liquid leakage and firing, and has a higher degree of safety, unlike the lithium-ion secondary battery using the liquid-type electrolyte. In favor of this advantage, there have been growing developments in the field of the all solid type lithium-ion secondary battery, expecting a further increased demand for the all solid type lithium-ion secondary battery, and various structures of the all solid type lithium-ion battery have been proposed.

Japanese Patent No. 3852169 (Patent Document 1) discloses an example of a lithium-ion secondary battery having a laminar body wherein positive and negative electrode layers in the form of organic polymer films containing active substances are laminated on respective opposite surfaces of a solid electrolyte layer in the form of an organic polymer film containing an electrolyte salt compound. JP-A-2010-251075 (Patent Document 2) discloses another example of the lithium-ion secondary battery, which has a laminar body wherein a positive electrode layer in the form of an inorganic sputtering film and a negative electrode layer in the form of an inorganic vapor-deposited film are laminated on respective opposite surfaces of a solid electrolyte layer in the form of an inorganic sputtering film containing lithium. Although these lithium-ion secondary batteries disclosed in the above-described two documents have respective advantages, these lithium-ion secondary batteries still have several problems to be solved.

In the lithium-ion secondary battery of Patent Document 1, the positive and negative electrode layers and the solid electrolyte layer are all constituted by the organic polymer films. Accordingly, the positive and negative electrode layers and the solid electrolyte layer exhibit an adequate degree of flexibility or plasticity. As a result, the lithium-ion secondary battery of Patent Document 1 can have an adequate degree of flexibility or plasticity, and exhibit an accordingly high degree of bending or flexural strength.

In this lithium-ion secondary battery, however, the positive and negative electrode layers and the solid electrolyte layer are coating layers, which have thicknesses of several tens of µm, so that there is a limitation in the amount of reduction of the thicknesses of the positive and negative electrode layers and the solid electrolyte layer in an effort to reduce the overall size of the lithium-ion secondary battery and to improve its output density. Further, it was difficult to form the positive electrode layer and the solid electrolyte layer with a uniform thickness over an entire surface area of a current collector, in the case where the above-described surface of the current collector is not sufficiently flat with local recessed and raised portions being formed therein or thereon, which correspond to respective recessed and raised portions formed in or on a surface on which the lithium-ion secondary battery is to be installed, or respective recessed and raised portions of the current collector itself. Therefore, depending on the configuration of surfaces of the current collector on which the positive and negative electrode layers are formed, the lithium-ion secondary battery may have difficulty in exhibiting a stable cell performance. Accordingly, the entire configuration of the lithium-ion secondary battery is limited to a generally plate-like shape, and freedom of choice of the entire shape of the lithium-ion secondary battery tends to be limited. Further, the production of the lithium-ion secondary battery requires an additional device for drying the positive and negative electrode layers and the solid electrolyte layer, which are formed in a wet process, so that the size of an apparatus for forming the positive and negative electrode layers and the solid electrolyte layer is increased, and the size of an apparatus for producing the lithium-ion secondary battery as a whole is accordingly increased, resulting in an inevitable increase of the running cost of these apparatuses. In addition, an extra time is required for drying the positive and negative electrode layers and the solid electrolyte layer after these layers are formed, giving rise to a problem that the required cycle time of production of each lithium-ion secondary battery is necessarily prolonged.

On the other hand, in the lithium-ion secondary battery of Patent Document 2, the positive electrode layer and the solid electrolyte layer are constituted by the sputtering films, while the negative electrode layer is constituted by the vapor-deposited film. Accordingly, the positive and negative electrode layers and the solid electrolyte layer can be formed so as to have thicknesses on a scale of nanometers, which thicknesses are sufficiently reduced as compared with thicknesses of the positive and negative electrode layers and the solid electrolyte layer which are constituted by coating films, whereby the lithium-ion secondary battery can have an effectively reduced size and an effectively increased output density. Further, the positive and negative electrode layers and the solid electrolyte layer are formed in a dry process, so that a device for drying the positive and negative electrode layers and the solid electrolyte layer is not required. As a result, an apparatus for producing the lithium-ion secondary battery can be advantageously simplified or have an advantageously reduced size.

In the lithium-ion secondary battery of Patent Document 2, however, the positive and negative electrode layers and the solid electrolyte layer are all formed of inorganic materials, so that the positive and negative electrode layers and the solid electrolyte layer exhibit a low degree of flexibility or plasticity. Further, the positive electrode layer and the solid electrolyte layer are formed by sputtering on a substrate (current collector or the like) made of a hard material, giving rise to a problem of reduction of bending or flexural strength of the lithium-ion secondary battery as a whole. Moreover, the positive electrode layer and the solid electrolyte layer are formed by sputtering, so that the rate of formation (amount of formation per unit time) of these layers is excessively low, giving rise to a problem that the required cycle time of production of each lithium-ion secondary battery is necessarily prolonged.

### PRIOR ART DOCUMENTS

### PATENT DOCUMENTS

Patent Document 1: Japanese Patent No. 3852169
Patent Document 2: JP-A-2010-251075

### SUMMARY OF THE INVENTION

### TECHNICAL PROBLEMS

The present invention was made in view of the background art described above. It is therefore a problem to be solved by the invention to provide a lithium-ion secondary battery which can advantageously exhibit its cell performance with a high degree of stability irrespective of the configuration of the surfaces of the current collector on which the positive and negative electrode layers are formed, and which has effectively increased freedom of choice of its shape, an advantageously improved output density, an advantageously improved flexural strength and an advantageously reduced size, and which can be produced by using an apparatus simplified as far as possible, with a reduced cycle time and at a reduced production cost.

### SOLUTION TO PROBLEMS

The above-described problem can be solved according to the principle of the invention which provides a lithium-ion secondary battery having a laminar body wherein a positive electrode layer and a negative electrode layer are laminated on respective opposite surfaces of a solid electrolyte layer, characterized in that: the positive electrode layer is constituted by a first vapor-deposited polymer film containing a positive electrode active substance; and the negative electrode layer is constituted by a second vapor-deposited polymer film containing a negative electrode active substance; while the solid electrolyte layer is constituted by a third vapor-deposited polymer film having lithium-ion conductivity. It is noted that the vapor-deposited polymer film as defined in the specification and appended claims includes not only a film formed by a vacuum vapor-deposition polymerization process, but also a film obtained by subjecting a precursor in the form of a film formed by a vacuum vapor-deposition process to a predetermined treatment.

According to one preferred form of the invention, the above-described first and second vapor-deposited polymer films have electron conductivity.

According to another preferred form of the invention, a first mixture layer is formed between the positive electrode layer and the solid electrolyte layer, the first mixture layer being formed of a mixture of a first polymer used to form the first vapor-deposited polymer film, and a third polymer used to form the third vapor-deposited polymer film, such that a content of the first polymer in the first mixture layer gradually decreases in a direction from the positive electrode layer toward the solid electrolyte layer, while a content of the third polymer in the first mixture layer gradually increases in the direction from the positive electrode layer toward the solid electrolyte layer.

According to still another preferred form of the invention, a second mixture layer is formed between the negative electrode layer and the solid electrolyte layer, the second mixture layer being formed of a mixture of a second polymer used to form the second vapor-deposited polymer film, and a third polymer used to form the third vapor-deposited polymer film, such that a content of the second polymer in the second mixture layer gradually decreases in a direction from the negative electrode layer toward the solid electrolyte layer, while a content of the third polymer in the second mixture layer gradually increases in the direction from the negative electrode layer toward the solid electrolyte layer.

According to a further preferred form of the invention, a positive electrode collector is laminated on one of opposite surfaces of the positive electrode layer, which surface is remote from the solid electrolyte layer, while a negative electrode collector is laminated on one of opposite surfaces of the negative electrode layer, which surface is remote from the solid electrolyte layer.

According to a still further preferred form of the invention, the above-described positive and negative electrode collectors are constituted by vapor-deposited metal films.

According to yet another preferred form of the invention, a third mixture layer is formed between the positive electrode layer and the positive electrode collector, the third mixture layer being formed of a mixture of a first polymer used to form the first vapor-deposited polymer film, and a metallic material used to form the positive electrode collector, such that a content of the first polymer in the third mixture layer gradually decreases in a direction from the positive electrode layer toward the positive electrode collector, while a content of the metallic material in the third mixture layer gradually increases in the direction from the positive electrode layer toward the positive electrode collector.

According to a further preferred form of the invention, a fourth mixture layer is formed between the negative electrode layer and the negative electrode collector, the fourth mixture layer being formed of a mixture of a second polymer used to form the second vapor-deposited polymer film, and a metallic material used to form the negative electrode collector, such that a content of the second polymer in the fourth mixture layer gradually decreases in a direction from the negative electrode layer toward the negative electrode collector, while a content of the metallic material in the fourth mixture layer gradually increases in the direction from the negative electrode layer toward the negative electrode collector.

### ADVANTAGEOUS EFFECTS OF THE INVENTION

Namely, in the lithium-ion secondary battery according to the invention, the positive and negative electrode layers and the solid electrolyte layer are all formed by a vapor-deposition polymerization process, which is a kind of a vacuum thin-film forming process like a sputtering process, and which permits formation of the vapor-deposited polymer films of organic polymers with extremely small thicknesses of several tens of nm to several tens of µm over an entire surface area of a substrate, irrespective of the configuration of the surface of the substrate, at a sufficiently high rate of formation.

Accordingly, the lithium-ion secondary battery of the invention can advantageously exhibit its cell performance with a high degree of stability irrespective of the configuration of the surfaces of the current collector on which the positive and negative electrode layers are formed, and have effectively increased freedom of choice of its shape, an advantageously improved output density, an advantageously improved flexural strength and an advantageously reduced size, and can be produced by using an apparatus simplified as far as possible, with a reduced cycle time and at a reduced production cost.

### BRIEF DESCRIPTION OF THE DRAWINGS

Fig. 1 is an enlarged fragmentary cross sectional view showing one example of a lithium-ion secondary battery according to the invention;
Fig. 2 is a view corresponding to that of Fig. 1, showing another example of a lithium-ion secondary according to the invention;
Fig. 3 is an enlarged fragmentary cross sectional view showing a further example of a lithium-ion secondary battery according to the invention; and
Fig. 4 is a cross sectional view showing the lithium-ion secondary battery shown in Fig. 3, which is provided with terminals and covered with protective films.

### MODES FOR CARRYING OUT THE INVENTION

To clarify the present invention more specifically, preferred embodiments of the invention will be described in detail by reference to the drawings.

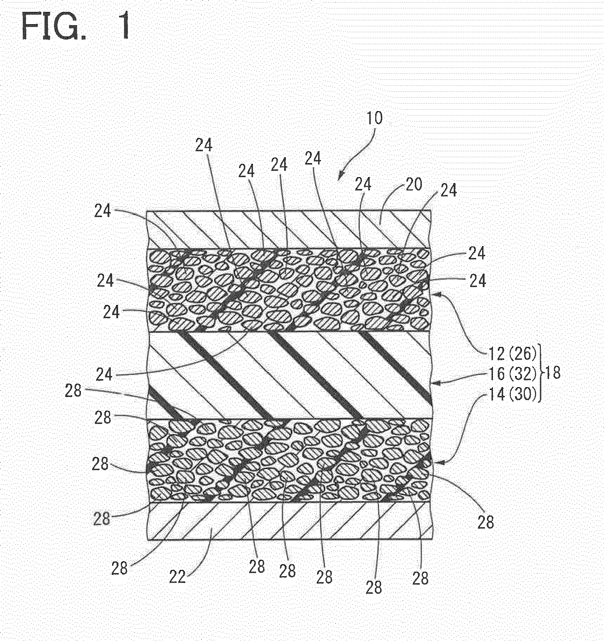

Referring first to the fragmentary longitudinal cross sectional view of Fig. 1, there is shown a lithium-ion secondary battery 10 constructed according to one embodiment of this invention. As shown in Fig. 1, the lithium-ion secondary battery 10 of this embodiment has a laminar body 18 which functions as an electric power generating element, and which consists of a positive electrode layer 12, a negative electrode layer 14 and a solid electrolyte layer 16 in the form of thin films, wherein the positive and negative electrode layers 12, 14 are laminated on respective opposite surfaces of the solid electrolyte layer 16. Further, a positive electrode collector 20 is laminated on one of the opposite surfaces of the positive electrode layer 12 of the laminar body 18, which surface is remote from the solid electrolyte layer 16, and a negative electrode collector 22 is laminated on one of the opposite surfaces of the negative electrode layer 14, which surface is remote from the solid electrolyte layer 16.

In the lithium-ion secondary battery 10 of this embodiment, the positive electrode layer 12 is constituted by a first vapor-deposited polymer film 26 containing a positive electrode active substance 24, while the negative electrode layer 14 is constituted by a second vapor-deposited polymer film 30 containing a negative electrode active substance 28.

More specifically described, in this embodiment, the positive electrode active substance 24 contained in the first vapor-deposited polymer film 26 is LiCoO₂. However, the positive electrode active substance 24 is not limited to LiCoO₂, but may be any active substance used in the prior art lithium-ion secondary battery. For instance, the positive electrode active substance 24 may be one or any combination of: Li(Ni-Mn-Co)O₂ (Ni of which may be partially replaced by Co or Mn); LiNiO₂; LiMn₂O₄; LiFePO₄; LiMnₓFe₁₋ₓPO₄; V₂O₅; V₆O₁₃; and TiS₂.

In this embodiment, the negative electrode active substance 28 contained in the second vapor-deposited polymer film 30 is natural graphite. However, the negative electrode active substance 28 is not limited to the natural graphite, but may be any active substance used in the prior art lithium-ion secondary battery. For instance, the negative electrode active substance 28 may be one or any combination of: hard carbon; carbon nano tubes; carbon nano walls; mesophase carbon micro beads; mesophase carbon fibers; lithium metals; lithium-aluminum alloys; intercalated lithium compounds in which lithium is intercalated in graphite or carbon; Li₄Ti₅O₁₂; Si; SiO; alloys of Si; Sn; SnO; alloys of Sn; and MnO₂.

The positive electrode active substance 24 and the negative electrode active substance 28 are respectively contained in the positive electrode layer 12 and the negative electrode layer 14, in the form of a multiplicity of particles or granules. The size of the particles or granules of the positive electrode active substance 24 and the negative electrode active substance 28 is not particularly limited, but the average size of the primary particles measured by a scanning electron microscope, or the average size of the secondary particles which are agglomerates of the primary particles is generally selected within a range of about 10nm-50µm, since the average size of the primary or secondary particles larger than 50µm not only makes it difficult to reduce the thickness of the lithium-ion secondary battery 10, but also may cause a problem of reduction of the discharge capacity when the current density is relatively high, and since the average size of the primary or secondary particles smaller than 10nm results in an extreme increase of the surface area per unit weight of the positive and negative electrode active substances 24, 28, and an increase of the required amount of use of an auxiliary electrically conducive agent, giving rise to a risk of reduction of the energy density of the lithium-ion secondary battery 10.

The multiplicity of the particles or granules of the positive electrode active substance 24 are densely contained in the first vapor-deposited polymer film 26, such that the particles or granules are bonded together by a resin material of the first vapor-deposited polymer film 26. Similarly, the multiplicity of the particles or granules of the negative electrode active substance 28 are densely contained in the second vapor-deposited polymer film 30, such that the particles or granules are bonded together by a resin material of the second vapor-deposited polymer film 30. Thus, the positive and negative electrode layers 12, 14 are formed as the thin films.

As described above, the positive electrode layer 12 and the negative electrode layer 14 are respectively constituted by the first vapor-deposited polymer film 26 and the second vapor-deposited polymer film 30 which are formed by a vapor-deposition polymerization process which is a kind of a vacuum dry process. Accordingly, the thicknesses of the positive and negative electrode layers 12, 14 can be controlled on the order of several tens of nanometers, and can therefore be controlled to be extremely small and uniform. Further, the amount of impurities contained in the positive and negative electrode layers 12, 14 is sufficiently reduced.

In the lithium-ion secondary battery 10 of this embodiment, polyaniline is used as the resin material to form each of the first and second vapor-deposited polymer films 26, 30. Polyaniline is formed by irradiating polyurea with a ultraviolet radiation after the polyurea is formed by a known vapor-deposition polymerization process in vacuum, for example. Thus, the vapor-deposited polymer films 26, 30 have a sufficiently high degree of electron conductivity and exhibit an adequate degree of flexibility or plasticity.

As well known in the art, polymerization to obtain polyurea does not require heat treatment of amine (including diamine, triamine and tetraamine) and isocyanate (including diisocyanate, triisocyanate and tetraisocyanate) used as material monomers, and is carried out with a polyaddition polymerization reaction which does not involve any amount of removal of water and alcohol. Accordingly, the cost of formation of the first and second vapor-deposited polymer films 26, 30 of polyaniline obtained by irradiating polyurea with the ultraviolet radiation can be reduced in the absence of a need for using a device for the heat treatment in the process of polymerization of the material monomers, and a facility for discharging water and alcohol removed as a result of the polymerization reaction, from a reaction chamber in which the polymerization reaction takes place. Further, polyurea has a high moisture resistance, and ensures a high withstand voltage of the positive and negative electrode layers 12, 14, with higher stability.

The thicknesses of the positive electrode layer 12 constituted by the first vapor-deposited polymer film 26 and the negative electrode layer 14 constituted by the second vapor-deposited polymer film 30 are generally selected within a range of about 1-200µm, since the thicknesses of the positive and negative electrode layers 12, 14 smaller than 1µm result in insufficient amounts of the positive electrode active substance 24 in the positive electrode layer 12 and the negative electrode active substance 28 in the negative electrode layer 14, leading to a possibility of reduction of the energy density, and since the thicknesses larger than 200µm not only make it difficult to reduce the thickness and size of the lithium-ion secondary battery 10, but also gives rise to a risk of difficulty in obtaining a required amount of electric current due to an increase of the internal resistance (ion transfer resistance) of the positive and negative electrode layers 12, 14.

The resin materials used to form the first and second vapor-deposited polymer films 26, 30 are not limited to polyaniline given above by way of example. Namely, any other known resin materials may be used as first and second polymers to form the first and second vapor-deposited polymer films 26, 30, as long as the resin materials can be formed into a film by the vapor-deposition polymerization process, and the positive and negative electrode active substances 24, 28 can be dispersed and contained in the resin materials. For instance, the first and second vapor-deposited polymer films 26, 30 may be formed of polyurea, polyamide, polyimide, polyamideimide, polyester, polyurethane, polyazomethine, acrylic, polyparaxylylene, and perylene, other than polyaniline obtained by irradiating polyurea with a ultraviolet radiation.

Among the above-indicated resin materials, the resin materials which have electron conductivity owing to an auxiliary electrically conductive agent contained therein or without this auxiliary agent can be suitably used to form the first and second vapor-deposited polymer films 26, 30, since the resin materials having the electron conductivity permit a sufficient increase of the electron conductivity and an effective reduction of membrane resistance of the positive electrode layer 12, resulting in an advantageous improvement of the output density of the lithium-ion secondary battery 10.

In particular, the first and second vapor-deposited polymer films 26, 30 are preferably formed of so-called electron-conductive polymers which have a high degree of the electron conductivity in the absence of the auxiliary electrically conductive agent, and which can be formed by vapor-deposition polymerization. The use of these electron-conductive polymers increases the productivity of the lithium-ion secondary battery 10, owing to the elimination of a step of adding the auxiliary electrically conductive agent to the polymer. For example, the electron-conductive polymers include: polyurea which has a π-conjugated structure and a side chain of which is bonded to a sulfonic acid group or a carboxyl group; and polyaniline which is obtained by irradiating the polyurea with a ultraviolet radiation, which has a π-conjugated structure and a side chain of which is bonded to a sulfonic acid group or a carboxyl group.

Examples of the auxiliary electrically conductive agents which can be used to increase the electron conductivity of the first and second vapor-deposited polymer films 26, 30 include electrically conductive carbon powders such as carbon black and electrically conductive carbon fibers such as carbon nano fibers and carbon nano tubes.

The positive electrode layer 12 constituted by the first vapor-deposited polymer film 26 containing the particles or granules of the positive electrode active substance 24, and the negative electrode layer 14 constituted by the second vapor-deposited polymer film 30 containing the particles or granules of the negative electrode active substance 28 are generally formed in the following manner. In this respect, it is noted that the positive and negative electrode layers 12,14 are formed by similar processes, except that some materials used for forming these layers 12,14 are different from each other, so that only the process for forming the positive electrode layer 12 will be described by way of example.

To form the first vapor-deposited polymer film 26 (positive electrode layer 12) formed of polyaniline containing LiCoO₂ as the positive electrode active substance 24, initially, amine and isocyanate as the material monomers are evaporated. Then, while vapor-deposition polymerization is carried out such that vapors of the evaporated monomers are deposited and polymerized on a surface of the positive electrode collector 20, within a reaction chamber in an evacuated state, particles or granules of LiCoO₂, whose primary or secondary particles have an average particle diameter within the preferred range of 10nm-50µm, are blown onto the surface of the positive electrode collector 20, by using a carrier gas such as an argon gas, a nitrogen gas or any other inert gas. Thus, polyurea containing the particles or granules of LiCoO₂ is formed, as a precursor of the first vapor-deposited polymer film 26, on the surface of the positive electrode collector 20. Then, the precursor is irradiated with a ultraviolet irradiation, whereby the first vapor-deposited polymer film 26 (positive electrode layer 12) constituted by polyaniline is formed on the positive electrode collector 20.

Materials used to form the positive electrode collector 20 on which the positive electrode layer 12 is formed, and the negative electrode collector 22 on which the negative electrode layer 14 is formed, are not particularly limited, and any conventionally used materials may be used. Namely, the positive and negative electrode collectors 20, 22 are formed by using aluminum, copper, titanium, nickel, iron or other metallic materials, or alloys of those metallic materials. Among these materials, aluminum is preferably used to form the positive electrode collector 20, and copper is preferably used to form the negative electrode collector 22. The positive and negative electrode collectors 20, 22 may be constituted by metallic foils, or vapor-deposited metal films formed by a known vapor-deposition process.

On the other hand, the solid electrolyte layer 16 is constituted by a third vapor-deposited polymer film 32 having lithium ion conductivity. Namely, the solid electrolyte layer 16 is formed by the vapor-deposition polymerization process which is a kind of the vacuum dry process, like the positive and negative electrode layers 12, 14. Accordingly, the thickness of the solid electrolyte layer 16 can also be controlled on the order of several tens of nanometers, and can therefore be controlled to be extremely small and uniform. Further, the amount of impurities contained in the solid electrolyte layer 16 is sufficiently reduced.

The third vapor-deposited polymer film 32 constituting the solid electrolyte layer 16 is formed of polyurea in this embodiment, so that like the positive and negative electrode layers 12, 14 constituted by the first and second vapor-deposited polymer films 26, 30 formed of polyaniline obtained by irradiating the polyurea with a ultraviolet radiation, the solid electrolyte layer 16 can be formed at an advantageously reduced cost, and can exhibit a high withstand voltage with higher stability. Further, the solid electrolyte layer 16 can exhibit an adequate degree of flexibility or plasticity.

In this embodiment, polyurea used as a third polymer to form the third vapor-deposited polymer film 32 has a repeating unit structure of polyethylene oxide represented by the following structural formula (1), and this polyethylene oxide contains a lithium salt, so that the third vapor-deposited polymer film 32 exhibits lithium ion conductivity.

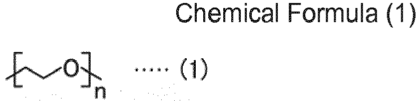

It is noted, however, that the material used to form the third vapor-deposited polymer film 32 constituting the solid electrolyte layer 16 is not limited to polyurea given above by way of example. The third vapor-deposited polymer film 32 may be formed of any other known resin material which can be formed into a film by the vapor-deposition polymerization process, and which has lithium-ion conductivity.

Described more specifically, the resin material of the third vapor-deposited polymer film 32 may be selected from among: polyamide having a repeating unit structure of polyethylene oxide and containing a lithium salt in polyethylene oxide; polyimide having a repeating unit structure of polyethylene oxide and containing a lithium salt in polyethylene oxide; polyamideimide having a repeating unit structure of polyethylene oxide and containing a lithium salt in polyethylene oxide; polyester having a repeating unit structure of polyethylene oxide and containing a lithium salt in polyethylene oxide; polyurethane having a repeating unit structure of polyethylene oxide and containing a lithium salt in polyethylene oxide; polyazomethine having a repeating unit structure of polyethylene oxide and containing a lithium salt in polyethylene oxide; polyurea which contains a lithium salt and a side chain of which is bonded to a sulfonic acid group; polyamide which contains a lithium salt and a side chain of which is bonded to a sulfonic acid group; polyimide which contains a lithium salt and a side chain of which is bonded to a sulfonic acid group; polyamideimide which contains a lithium salt and a side chain of which is bonded to a sulfonic acid group; polyester which contains a lithium salt and a side chain of which is bonded to a sulfonic acid group; polyurethane which contains a lithium salt and a side chain of which is bonded to a sulfonic acid group; and polyazomethine which contains a lithium salt and a side chain of which is bonded to a sulfonic acid group.

In summary, the third vapor-deposited polymer film 32 constituting the solid electrolyte layer 16 may be formed of the resin material (hereinafter referred to as "resin A") which has a repeating unit structure of polyethylene oxide, which contains a lithium salt in polyethylene oxide, and which can be formed into a film by the vapor-deposition polymerization process, or the resin material (hereinafter referred to as "resin B") which contains a lithium salt, a side chain of which is bonded to a sulfonic acid group, and which can be formed into a film by the vapor-deposition polymerization process. It is noted that the repeating unit structure of polyethylene oxide of the resin A may be bonded to the molecules of the resin A, or may not be bonded to the molecules but merely mixed in the resin A.

The solid electrolyte layer 16 constituted by the third vapor-deposited polymer film 32 formed of the resin A may be formed by several methods, some of which will be described below by way of example.

In a first method, vapor-deposition polymerization of olygo-ethylene oxide (low molecular polyethylene oxide having a molecular weight of 200-2000), amine and isocyanate is carried out such that these materials are polymerized on a surface of the positive electrode layer 12 laminated on the positive electrode collector 20 (or on a surface of the negative electrode layer 14 laminated on the negative electrode collector 22), while particles or granules of a lithium salt are blown onto the positive electrode layer 12 (or the negative electrode layer 14) by using a carrier gas such as an argon gas, a nitrogen gas or any other inert gas. According to this method, the third vapor-deposited polymer film 32 formed of polyurea whose molecules are bonded to a repeating unit structure of polyethylene oxide, and which contains the lithium salt in polyethylene oxide, is formed on the positive electrode layer 12 (or the negative electrode layer 14), to give the solid electrolyte layer 16. It is noted that a side chain of at least one of the amine and isocyanate used to form the solid electrolyte layer 16 may be bonded to a repeating unit structure of polyethylene oxide.

In a second method, vapor-deposition polymerization of: amine a side chain of which is bonded to a repeating unit structure of polyethylene oxide; and isocyanate a side chain of which is bonded to a repeating unit structure of polyethylene oxide, is carried out such that these materials are polymerized on the positive electrode layer 12 (or the negative electrode layer 14), while particles or granules of a lithium salt are blown onto the positive electrode layer 12 (or the negative electrode layer 14) by using a carrier gas. According to this method, too, the third vapor-deposited polymer film 32 formed of polyurea whose molecules are bonded to the repeating unit structure of polyethylene oxide, and which contains the lithium salt in polyethylene oxide, is formed on the positive electrode layer 12 (or the negative electrode layer 14), to give the solid electrolyte layer 16.

In a third method, vapor-deposition polymerization is carried out by using amine and isocyanate, a side chain of either one of which is bonded to a repeating unit structure of polyethylene oxide, such that these materials are polymerized on the positive electrode layer 12 (or the negative electrode layer 14), while particles or granules of a lithium salt are blown onto the positive electrode layer 12 (or the negative electrode layer 14) by using a carrier gas. According to this method, too, the third vapor-deposited polymer film 32 formed of polyurea whose molecules are bonded to the repeating unit structure of polyethylene oxide, and which contains the lithium salt in polyethylene oxide, is formed on the positive electrode layer 12 (or the negative electrode layer 14), to give the solid electrolyte layer 16.

In a fourth method, initially, a liquid polyethylene oxide in which a lithium salt is dissolved is prepared by: dissolving a predetermined amount of the lithium salt in a polyethylene oxide which has a low molecular weight of lower than 600, and which is in a liquid state at the room temperature; or preparing a liquid polyethylene oxide by heating a polyethylene oxide which has a molecular weight of not lower than 600, and which is in a solid state at the room temperature, such that the polyethylene oxide is melted, and dissolving a predetermined amount of the lithium salt in the thus prepared liquid polyethylene oxide. Then, vapor-deposition polymerization of amine and isocyanate is carried out such that these materials are polymerized on the positive electrode layer 12 (or the negative electrode layer 14), while micro particles of the liquid polyethylene oxide which has been prepared in advance, and in which the lithium salt is dissolved, are blown onto the positive electrode layer 12 (or the negative electrode layer 14) together with a carrier gas such as an inert gas, such that the micro particles are dispersed in a mist state in the carrier gas. According to this method, the third vapor-deposited polymer film 32 formed of polyurea in which a repeating unit structure of polyethylene oxide is mixed without being bonded to the molecules of polyurea, and which contains the lithium salt in polyethylene oxide, is formed on the positive electrode layer 12 (or the negative electrode layer 14), to give the solid electrolyte layer 16.

The solid electrolyte layer 16 constituted by the third vapor-deposited polymer film 32 formed of the resin B which contains a lithium salt, and a side chain of which is bonded to a sulfonic acid group, is formed by several methods described below, for example.

In a first method, vapor-deposition polymerization of: amine a side chain of which is bonded to a sulfonic acid group; and isocyanate a side of which is bonded to a sulfonic acid group is carried out such that these materials are polymerized on the positive electrode layer 12 (or the negative electrode layer 14), while particles or granules of a lithium salt are blown onto the positive electrode layer 12 (or the negative electrode layer 14) by using a carrier gas. According to this method, the third vapor-deposited polymer film 32 formed of polyurea which contains the lithium salt, and a side chain of which is bonded to a sulfonic acid group is formed on the positive electrode layer 12 (or the negative electrode layer 14), to give the solid electrolyte layer 16.

In a second method, vapor-deposition polymerization is carried out by using amine and isocyanate, a side chain of either one of which is bonded to a sulfonic acid group, such that these materials are polymerized on the positive electrode layer 12 (or the negative electrode layer 14), while particles or granules of a lithium salt are blown onto the positive electrode layer 12 (or the negative electrode layer 14) by using a carrier gas. According to this method, too, the third vapor-deposited polymer film 32 formed of polyurea which contains the lithium salt, and a side chain of which is bonded to a sulfonic acid group is formed on the positive electrode layer 12 (or the negative electrode layer 14), to give the solid electrolyte layer 16.

The lithium salt contained in the solid electrolyte layer 16 (third vapor-deposited polymer film 32) is an ion dissociation compound containing lithium, and is not particularly limited. Any kind of lithium salt conventionally used to impart lithium-ion conductivity to a desired resin material may be used. For instance, LiN(SO₂CF₃)₂, LiN(SO₂C₂F₅)₂, LiBF₄ and LiClO₄ may be used as the lithium salt to be contained in the solid electrolyte layer 16.

Although the thickness of the solid electrolyte layer 16 is not particularly limited, it is generally selected within a range of about 50nm-100µm, since the thickness of the solid electrolyte layer 16 smaller than 50nm makes it difficult to ensure sufficient electric insulation between the positive and negative electrode layers 12, 14, giving rise to a possibility of internal short-circuiting, and since the thickness larger than 100µm not only makes it difficult to reduce the thickness of the lithium-ion secondary battery 10, but also gives rise to a risk of reduction of the output density due to an increase of the internal resistance of the solid electrolyte layer 16.

The lithium-ion secondary battery 10 of this embodiment is constituted by: the laminar body 18 wherein the above-described positive and negative electrode layers 12, 14 are laminated on the respective opposite surfaces of the above-described solid electrolyte layer 16; and the positive and negative electrode collectors 20, 22 which are laminated on respective opposite sides of the laminar body 18, as shown in Fig. 1. When the lithium-ion secondary battery 10 is in use, a positive terminal and a negative terminal (not shown) are generally connected to the respective positive and negative electrode collectors 20, 22, and the lithium-ion secondary battery 10 is covered with a known protective film.

It will be understood from the foregoing description that in the lithium-ion secondary battery 10 of this embodiment, the positive and negative electrode layers 12, 14 are respectively constituted by the first and second vapor-deposited polymer films 26, 30 formed of polyaniline having an adequate degree of flexibility or plasticity, and the solid electrolyte layer 16 is constituted by the third vapor-deposited polymer film 32 formed of polyurea having an adequate degree of flexibility or plasticity. Therefore, the lithium-ion secondary battery 10 as a whole exhibits an adequate degree of flexibility or plasticity, and an accordingly high degree of bending or flexural strength. As a result, ease of handling of the lithium-ion secondary battery 10 can be advantageously improved, and freedom of choice of the place in which the lithium-ion secondary battery 10 is installed can be effectively increased.

In the lithium-ion secondary battery 10, the positive and negative electrode layers 12, 14 and the solid electrolyte layer 16 are respectively constituted by the first, second and third vapor-deposited polymer films 26, 30, 32, so that even where the surface of the positive electrode collector 20 on which the positive electrode layer 12 is formed, and the surface of the negative electrode collector 22 on which the negative electrode layer 14 is formed, are not flat surfaces, but curved surfaces, or surfaces having local recessed and raised portions being formed therein or thereon, for example, the positive and negative electrode layers 12, 14 can be formed with a high degree of uniformity over the entire areas of the above-described surfaces of the positive and negative electrode collectors 20, 22. Further, the solid electrolyte layer 16 can be formed with a high degree of uniformity over entire surface areas of the positive and negative electrode layers 12, 14 formed on the surfaces of the positive and negative electrode collectors 20, 22, which surfaces are not sufficiently flat. Therefore, irrespective of the configurations of the surfaces of the positive and negative electrode collectors 20, 22 on which the positive and negative electrode layers 12, 14 are respectively formed, the lithium-ion secondary battery 10 can advantageously exhibit its cell performance with a high degree of stability, and have and advantageously improved freedom of choice of its shape.

Further, in the lithium-ion secondary battery 10 of this embodiment, each of the positive and negative electrode layers 12, 14 and the solid electrolyte layer 16 respectively constituted by the first, second and third vapor-deposited polymer films 26, 30, 32 can be formed with a sufficiently small thickness. Therefore, the lithium-ion secondary battery 10 can have an effectively reduced size and an effectively improved output density owing to reduction of the thicknesses of the positive and negative electrode layers 12, 14 and the solid electrolyte layer 16.

Further, in the lithium-ion secondary battery 10, the positive and negative electrode layers 12, 14 and the solid electrolyte layer 16 are formed by the vapor-deposition polymerization process which is a kind of a vacuum dry process. Accordingly, there is no need to use a device for drying the positive and negative electrode layers 12, 14 and the solid electrolyte layer 16 after these layers are formed, so that it is possible to accordingly simplify the required production apparatus and to reduce its size, resulting in an advantageous reduction of the running cost of the production apparatus. Further, the required cycle time of production of the lithium-ion secondary battery 10 can be extremely effectively reduced owing to the elimination of the drying step, and a sufficiently high rate of film formation by the vapor-deposition polymerization process.

By the way, in the lithium-ion secondary battery disclosed in the above-described Japanese Patent No. 3852169, the positive electrode layer, the negative electrode layer and the solid electrolyte layer are all constituted by the coating layers. Further, in the lithium-ion secondary battery disclosed in JP-A-2010-251075, for example, the positive electrode layer and the solid electrolyte layer are constituted by the sputtering films while the negative electrode layer is constituted by the vapor-deposited film. Accordingly, in the above-described conventional lithium-ion secondary batteries, there exist distinct boundary interfaces between the positive electrode layer and the solid electrolyte layer, and between the negative electrode layer and the solid electrolyte layer. The presence of the distinct boundary interfaces between the layers may result in an increase of the interface resistance and reduction of the output density of the lithium-ion secondary battery.

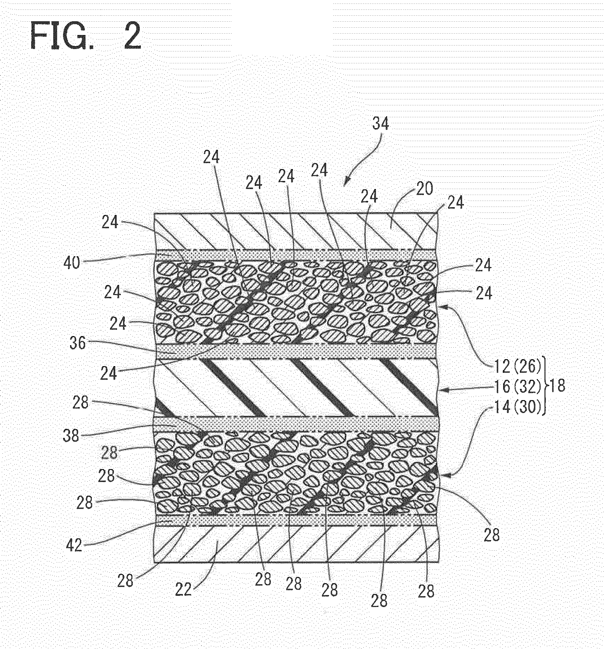

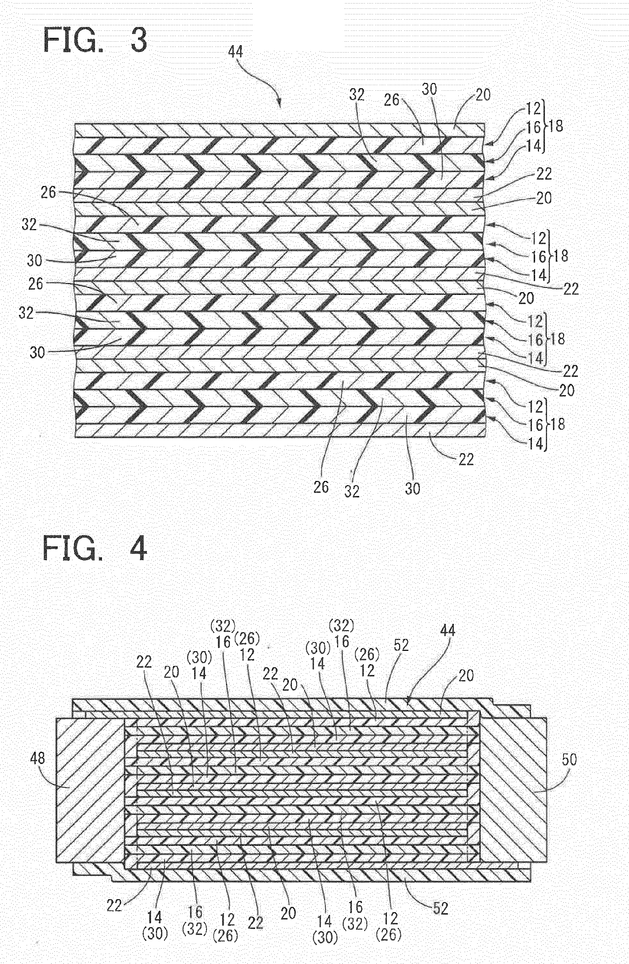

Fig. 2 shows a lithium-ion secondary battery constructed according to another embodiment of the present invention, which is configured to restrict the above-described reduction of its output density. The lithium-ion secondary battery of this embodiment has the laminar body 18 wherein the positive electrode layer 12 constituted by the first vapor-deposited polymer film 26, and the negative electrode layer 14 constituted by the second vapor-deposited polymer film 30, are laminated on the respective opposite surfaces of the solid electrolyte layer 16 constituted by the third vapor-deposited polymer film 32. This lithium-ion secondary battery is basically identical in construction with the lithium-ion secondary battery 10 of the above-described embodiment, so that the reference signs used to denote the members and portions of the lithium-ion secondary battery 10 are used to denote the corresponding members and portions (including the corresponding members and portions formed of materials different from those used in the above-described embodiment) of the lithium-ion secondary battery of this embodiment, which will not be described redundantly. Also, the reference signs used to denote the members and portions of the lithium-ion secondary battery 10 are also used to denote the corresponding members and portions (including the corresponding members and portions formed of materials different from those used in the above-described embodiment) of a lithium-ion secondary battery 44 shown in Figs. 3 and 4, which will be described later.

In the lithium-ion secondary battery 34 of this embodiment, a first mixture layer 36 is formed between the positive electrode layer 12 and the solid electrolyte layer 16, while a second mixture layer 38 is formed between the negative electrode layer 14 and the solid electrolyte layer 16, as shown in Fig. 2. In this embodiment, the first and second vapor-deposited polymer films 26, 30 respectively constituting the positive and negative electrode layers 12, 14 are formed of polyurethane, and the solid electrolyte layer 16 is formed of polyurea having a repeating unit structure of polyethylene oxide and containing a lithium salt in polyethylene oxide.

The first mixture layer 36 is formed of a mixture of: polyurethane as the resin material (the first polymer) used to form the first vapor-deposited polymer film 26 constituting the positive electrode layer 12; and polyurea as the resin material (the third polymer) used to form the third vapor-deposited polymer film 32 constituting the solid electrolyte layer 16. The second mixture layer 38 is formed of a mixture of: polyurethane as the resin material (the second polymer) used to form the second vapor-deposited polymer film 30 constituting the negative electrode layer 14; and polyurea as the resin material (the third polymer) used to form the third vapor-deposited polymer film 32 constituting the solid electrolyte layer 16. Namely, each of the first and second mixture layers 36, 38 is constituted by a vapor-deposited polymer film, a portion of which is formed of polyurethane produced by the vapor-deposition polymerization process, while the other portion of which is formed of polyurea produced by the vapor-deposition polymerization process. The first mixture layer 36 contains at least one of the positive electrode active substance 24 and a lithium salt, as needed, while the second mixture layer 38 contains at least one of the negative electrode active substance 28 and a lithium salt, as needed. The first and second mixture layers 36, 38 are electrically conductive.

In the first mixture layer 36, the content of polyurethane gradually decreases in the direction from the positive electrode layer 12 toward the solid electrolyte layer 16, while the content of polyurea gradually increases in the direction from the positive electrode layer 12 toward the solid electrolyte layer 16. In the second mixture layer 38, the content of polyurethane gradually decreases in the direction from the negative electrode layer 14 toward the solid electrolyte layer 16, while the content of polyurea gradually increases in the direction from the negative electrode layer 14 toward the solid electrolyte layer 16. Namely, the contents of polyurethane and polyurea in the first and second mixture layers 36, 38 change linearly in the directions from the positive and negative electrode layers 12, 14 toward the solid electrolyte layer 16.

The above-described first mixture layer 36 is formed in the following manner, for example. Initially, within a reaction chamber in an evacuated state, the first vapor-deposited polymer film 26 of polyurethane is formed on the positive electrode collector 20 by a known vapor-deposition polymerization process. After the thickness of the first vapor-deposited polymer film 26 reaches a predetermined value, an amount of supply of vapors of material monomers of polyurethane into the reaction chamber is gradually reduced to zero. On the other hand, upon or immediately before or after initiation of reduction of the amount of supply of the vapors of the material monomers of polyurethane into the reaction chamber, supply of vapors of material monomers of polyurea which constitutes the third vapor-deposited polymer film 32, into the reaction chamber is initiated, such that an amount of supply of the vapors of the material monomers of polyurea into the reaction chamber is gradually increased to a predetermined constant value. Thus, an amount of further production of polyurethane on the positive electrode layer 12 (first vapor-deposited polymer film 26) of the predetermined thickness is gradually reduced, while an amount of production of polyurea on the positive electrode layer 12 is gradually increased, whereby the first mixture layer 36 having the above-described structure is formed on the positive electrode layer 12. It is noted that operations to gradually reduce the amount of supply of the vapors of the material monomers of polyurethane into the reaction chamber, or to gradually increase the amount of supply of the vapors of the material monomers of polyurea into the reaction chamber, are performed by adjusting an amount of opening of valves provided on pipes for supplying the vapors of the material monomers into the reaction chamber, for example. The second mixture layer 38 is formed by a method similar to that of forming the first mixture layer 36.

In this embodiment, the first and second mixture layers 36, 38 having the above-described structures are respectively formed between the positive electrode layer 12 and the solid electrolyte layer 16, and between the negative electrode layer 14 and the solid electrolyte layer 16, so that the positive and negative electrode layers 12, 14 and the solid electrolyte layer 16 do not have any distinct boundary interface therebetween. As a result, interface resistances between the positive electrode layer 12 and the solid electrolyte layer 16, and between the negative electrode layer 14 and the solid electrolyte layer 16 are advantageously reduced, resulting in an effective increase of lithium-ion conductivity between the solid electrolyte layer 16 and the positive and negative electrode layers 12, 14.

The lithium-ion secondary battery 34 of this embodiment further has a third mixture layer 40 formed between the positive electrode collector 20 and the positive electrode layer 12, and a fourth mixture layer 42 formed between the negative electrode collector 22 and the negative electrode layer 14. In this embodiment, the positive and negative electrode collectors 20, 22 are formed by a known vacuum vapor-deposition process, and the positive electrode collector 20 is constituted by a vapor-deposited aluminum film, while the negative electrode collector 22 is constituted by a vapor-deposited copper film. Therefore, the thicknesses of these positive and negative electrode collectors 20, 22 can be advantageously reduced as compared with the thicknesses of the positive and negative electrode collectors 20, 22 constituted by metal foils, for example. As a result, the thickness and size of the lithium-ion secondary battery 34 can be effectively reduced.

The third mixture layer 40 is formed of a mixture of aluminum used to form the positive electrode collector 20 and polyurethane as the resin material (the first polymer) used to form the first vapor-deposited polymer film 26 constituting the positive electrode layer 12. The fourth mixture layer 42 is formed of a mixture of copper used to form the negative electrode collector 22 and polyurethane as the resin material (the second polymer) used to form the second vapor-deposited polymer film 30 constituting the negative electrode layer 14. Namely, a portion of the third mixture layer 40 is formed of aluminum, and the other portion of the third mixture layer 40 is formed of polyurethane produced by the vapor-deposition polymerization process, while a portion of the fourth mixture layer 42 is formed of copper, and the other portion of the fourth mixture layer 42 is formed of polyurethane produced by the vapor-deposition polymerization process. The third mixture layer 40 contains the positive electrode active substance 24, as needed, while the fourth mixture layer 42 contains the negative electrode active substance 28, as needed. The third and fourth mixture layers 40, 42 are electrically conductive.

In the third mixture layer 40, the content of aluminum gradually decreases in the direction from the positive electrode collector 20 toward the positive electrode layer 12, while the content of polyurethane gradually increases in the direction from the positive electrode collector 20 toward the positive electrode layer 12. In the fourth mixture layer 42, the content of copper gradually decreases in the direction from the negative electrode collector 22 toward the negative electrode layer 14, while the content of polyurethane gradually increases in the direction from the negative electrode collector 22 toward the negative electrode layer 14. Namely, the contents of aluminum and polyurethane in the third mixture layer 40, and the contents of copper and polyurethane in the fourth mixture layer 42 change linearly in the directions from the positive and negative electrode collectors 20, 22 toward the positive and negative electrode layers 12, 14.

The above-described third mixture layer 40 is formed in the following manner, for example. Initially, within a reaction chamber in an evacuated state, a vapor-deposited aluminum film is formed on a surface of a substrate such as a suitable protective film by a known vapor-deposition process, to form the positive electrode collector 20. After the thickness of the positive electrode collector 20 reaches a predetermined value, an amount of supply of a vapor of aluminum into the reaction chamber is gradually reduced to zero. On the other hand, upon or immediately before or after initiation of reduction of the amount of supply of the vapor of aluminum into the reaction chamber, supply of vapors of material monomers of polyurethane which constitutes the first vapor-deposited polymer film 26, into the reaction chamber is initiated, such that an amount of supply of the vapors of the material monomers of polyurethane into the reaction chamber is gradually increased to a predetermined constant value. Thus, an amount of further deposition of aluminum on the positive electrode collector 20 of the predetermined thickness is gradually reduced, while an amount of production of polyurethane on the positive electrode collector 20 is gradually increased, whereby the third mixture layer 40 having the above-described structure is formed on the positive electrode collector 20. It is noted that operations to gradually reduce the amount of supply of the vapor of aluminum into the reaction chamber, or to gradually increase the amount of supply of the vapors of the material monomers of polyurethane into the reaction chamber, are performed by adjusting an amount of opening of valves provided on pipes for supplying the respective vapors into the reaction chamber, for example. The fourth mixture layer 42 is formed by a method similar to that of forming the third mixture layer 40.

In this embodiment, the third and fourth mixture layers 40, 42 having the above-described structures are respectively formed between the positive electrode collector 20 and the positive electrode layer 12, and between the negative electrode collector 22 and the negative electrode layer 14, so that the positive electrode collector 20 and the positive electrode layer 12 do not have any distinct boundary interface therebetween, and the negative electrode collector 22 and the negative electrode layer 14 do not have any distinct boundary interface therebetween. As a result, interface resistances between the positive electrode collector 20 and the positive electrode layer 12, and between the negative electrode collector 22 and the negative electrode layer 14 are advantageously reduced, resulting in an effective increase of the electron conductivity between the positive electrode collector 20 and the positive electrode layer 12, and between the negative electrode collector 22 and the negative electrode layer 14.

It will be understood from the foregoing description that in the lithium-ion secondary battery 34 of this embodiment, the positive electrode layer 12, the negative electrode layer 14 and the solid electrolyte layer 16 are respectively constituted by the first, second and third vapor-deposited polymer films 26, 30, 32. Accordingly, the lithium-ion secondary battery 34 of this embodiment has substantially the same operational and physical advantages achieved in the above-described embodiment.

In the lithium-ion secondary battery 34 of this embodiment, the ion conductivity is advantageously improved owing to the presence of the first and second mixture layers 36, 38 respectively formed between the positive electrode layer 12 and the solid electrolyte layer 16, and between the negative electrode layer 14 and the solid electrolyte layer 16. Accordingly, the output density of the lithium-ion secondary battery 34 is extremely effectively improved. Further, the electron conductivity is advantageously improved owing to the presence of the third and fourth mixture layers 40, 42 respectively formed between the positive electrode collector 20 and the positive electrode layer 12, and between the negative electrode collector 22 and the negative electrode layer 14. Accordingly, the output density of the lithium-ion secondary battery 34 is more advantageously improved.

While the embodiments of the present invention have been described above in detail for illustrative purpose only, it is to be understood that the invention is not limited to the details of the illustrated embodiments.

In the above-described first and second embodiments, the lithium-ion secondary batteries 10, 34 are configured to have the single laminar body 18 interposed between the positive and negative electrode collectors 20, 22. However, the present invention may be embodied as a lithium-ion secondary battery 44 which is configured to have a plurality of the laminar bodies 18, by superposing a plurality of the lithium-ion secondary batteries 10, 34 on each other, such that the positive electrode collector 20 of one of the two adjacent lithium-ion secondary batteries 10, 34 is in contact with the negative electrode collector 22 of the other of the adjacent lithium-ion secondary batteries 10, 34, as shown in Fig. 3. This lithium-ion secondary battery 44 can be efficiently produced with compact construction, and can be used for higher-voltage applications.

In the lithium-ion secondary battery 44 constituted by the plurality of the laminar bodies 18 superposed on each other, terminals such as tab leads 48, 50 are provided on respective two side surfaces of the lithium-ion secondary battery 44, which surfaces are opposed to each other in a direction perpendicular to the direction of lamination of the laminar bodies 18. Among a plurality of the positive electrode collectors 20, only one positive electrode collector 20 located at one end of the lithium-ion secondary battery 44 in the direction of lamination of the laminar bodies 18 is connected to the tab lead 48, while among a plurality of the negative electrode collectors 22, only one negative electrode collector 22 located at the other end of the lithium-ion secondary battery 44 in the direction of lamination of the laminar bodies 18 is connected to the tab lead 50. The lithium-ion secondary battery 44 is entirely covered with protective films 52, 52, for example.

In the lithium-ion secondary battery 44, each positive electrode layer 12 has an end portion which is positioned on the side of the tab lead 50, and which does not contain the positive electrode active substance 24, while each negative electrode layer 14 has an end portion which is positioned on the side of the tab lead 40, and which does not contain the negative electrode active substance 28. Among a plurality of the positive electrode layers 12, the positive electrode layer 12 located adjacent to the above-described one end of the lithium-ion secondary battery 44 in the direction of lamination of the laminar bodies 18 has the end portion which does not contain the positive electrode active substance 24, and which is interposed between an end portion of the positive electrode collector 20 connected to the tab lead 48, and the tab lead 50. Each of the other positive electrode layers 12 has the end portion which does not contain the positive electrode active substance 24, and which is interposed between end portions of the positive and negative electrode collectors 20, 22 superposed on each other, and the tab lead 50. Among a plurality of the negative electrode layers 14, the negative electrode layer 14 located adjacent to the above-described other end of the lithium-ion secondary battery 44 in the direction of lamination of the laminar bodies 18 has the end portion which does not contain the negative electrode active substance 28, and which is interposed between an end portion of the negative electrode collector 22 connected to the tab lead 50, and the tab lead 480. Each of the other negative electrode layers 14 has the end portion which does not contain the negative electrode active substance 28, and which is interposed between end portions of the positive and negative electrode collectors 20, 22 superposed on each other, and the tab lead 48. Thus, electric insulation is ensured between the tab leads 48, 50 and the positive and negative electrode collectors 20, 22, other than the positive and negative electrode collectors 20, 22 located at the respective opposite ends of the lithium-ion secondary battery 44 in the direction of lamination of the laminar bodies 18.

In the above-described second embodiment, the first and second mixture layers 36, 38 are respectively formed between the positive electrode collector 20 and the positive electrode layer 12 and between the negative electrode collector 22 and the negative electrode layer 14, while the third and fourth mixture layers 40, 42 are respectively formed between the positive electrode layer 12 and the solid electrolyte layer 16 and between the negative electrode layer 14 and the solid electrolyte layer 16. However, the lithium-ion secondary battery according to the second embodiment may be modified such that at least one of the first through fourth mixture layers 36, 38, 40, 42 is formed.

The solid electrolyte layer 16 does not necessarily contain the lithium salt as long as the solid electrolyte layer 16 has lithium-ion conductivity.

The positive and negative electrode collectors 20, 22 may be omitted where the positive and negative electrode layers 12,14 have a sufficiently high degree of electron conductivity.

It is to be understood that the present invention may be embodied with various other changes, modifications and improvements, which may occur to those skilled in the art, without departing from the spirit and scope of the invention, and that such changes, modifications and improvements are also within the scope of the invention.

**NOMENCLATURE OF REFERENCE SIGNS**

| | |
|---|---|
| 10, 34, 44: Lithium-ion secondary battery | |
| 12: Positive electrode layer | 14: Negative electrode layer |
| 16: Solid electrolyte layer | 18: Laminar body |
| 20: Positive electrode collector | 22: Negative electrode collector |
| 24: Positive electrode active substance | |
| 26: First vapor-deposited polymer film | |
| 28: Negative electrode active substance | |
| 30: Second vapor-deposited polymer film | |
| 32: Third vapor-deposited polymer film | |
| 36: First mixture layer | |
| 38: Second mixture layer | |
| 40: Third mixture layer | |
| 42: Fourth mixture layer | |

## Claims

1. A lithium-ion secondary battery having a laminar body wherein a positive electrode layer and a negative electrode layer are laminated on respective opposite surfaces of a solid electrolyte layer, **characterized in that**:
the positive electrode layer is constituted by a first vapor-deposited polymer film containing a positive electrode active substance; and
the negative electrode layer is constituted by a second vapor-deposited polymer film containing a negative electrode active substance; while
the solid electrolyte layer is constituted by a third vapor-deposited polymer film having lithium-ion conductivity.

2. The lithium-ion secondary battery according to claim 1, wherein the first and second vapor-deposited polymer films have electron conductivity.

3. The lithium-ion secondary battery according to claim 1 or 2, wherein a first mixture layer is formed between the positive electrode layer and the solid electrolyte layer, the first mixture layer being formed of a mixture of a first polymer used to form the first vapor-deposited polymer film, and a third polymer used to form the third vapor-deposited polymer film, such that a content of the first polymer in the first mixture layer gradually decreases in a direction from the positive electrode layer toward the solid electrolyte layer, while a content of the third polymer in the first mixture layer gradually increases in the direction from the positive electrode layer toward the solid electrolyte layer.

4. The lithium-ion secondary battery according to any one of claims 1 to 3, wherein a second mixture layer is formed between the negative electrode layer and the solid electrolyte layer, the second mixture layer being formed of a mixture of a second polymer used to form the second vapor-deposited polymer film, and a third polymer used to form the third vapor-deposited polymer film, such that a content of the second polymer in the second mixture layer gradually decreases in a direction from the negative electrode layer toward the solid electrolyte layer, while a content of the third polymer in the second mixture layer gradually increases in the direction from the negative electrode layer toward the solid electrolyte layer.

5. The lithium-ion secondary battery according to any one of claims 1 to 4, wherein a positive electrode collector is laminated on one of opposite surfaces of the positive electrode layer, which surface is remote from the solid electrolyte layer, while a negative electrode collector is laminated on one of opposite surfaces of the negative electrode layer, which surface is remote from the solid electrolyte layer.

6. The lithium-ion secondary battery according to claim 5, wherein the positive and negative electrode collectors are constituted by vapor-deposited metal films.

7. The lithium-ion secondary battery according to claim 6, wherein a third mixture layer is formed between the positive electrode layer and the positive electrode collector, the third mixture layer being formed of a mixture of a first polymer used to form the first vapor-deposited polymer film, and a metallic material used to form the positive electrode collector, such that a content of the first polymer in the third mixture layer gradually decreases in a direction from the positive electrode layer toward the positive electrode collector, while a content of the metallic material in the third mixture layer gradually increases in the direction from the positive electrode layer toward the positive electrode collector.

8. The lithium-ion secondary battery according to claim 6 or 7, wherein a fourth mixture layer is formed between the negative electrode layer and the negative electrode collector, the fourth mixture layer being formed of a mixture of a second polymer used to form the second vapor-deposited polymer film, and a metallic material used to form the negative electrode collector, such that a content of the second polymer in the fourth mixture layer gradually decreases in a direction from the negative electrode layer toward the negative electrode collector, while a content of the metallic material in the fourth mixture layer gradually increases in the direction from the negative electrode layer toward the negative electrode collector.
